# EUROPÄISCHE PATENTANMELDUNG

(11) **EP 4 552 940 A1**
(43) Veröffentlichungstag der Anmeldung: **14.05.2025**
(21) Anmeldenummer: 24209100.7
(22) Anmeldetag: 28.10.2024
(51) Int. Cl.: B60W 50/00, G06N 3/045, B60W 60/00

(54) **VERFAHREN, VORRICHTUNG UND COMPUTERPROGRAMMPRODUKT ZUM BETREIBEN EINES FAHRZEUGS**

(30) Priorität: 09.11.2023 DE 102023131070
(71) Anmelder: Bayerische Motoren Werke Aktiengesellschaft, 80809 München (DE)
(72) Erfinder: Augst, Alexander, 80937 München (DE)

(57) **Zusammenfassung**

Bei einem Verfahren zum Betreiben eines Fahrzeugs (102) wird ein mittels zumindest einer Fahrzeugfunktionalität (FKT1, FKT2, FKT3, FKT4) zu erreichendes Ziel ermittelt und es werden abhängig von dem Ziel erste Eingabedaten erzeugt. Ein erster generativer vortrainierter Transformer (GPT1) wird abhängig von den ersten Eingabedaten betrieben, um erste Ausgabedaten zu erzeugen. Abhängig von den ersten Ausgabedaten werden zweite Eingabedaten erzeugt. Bei einer ersten Ausführungsform wird der erste generative vortrainierte Transformer (GPT1) abhängig von zweiten Eingabedaten betrieben, um zweite Ausgabedaten zu erzeugen. Alternativ oder zusätzlich wird zumindest ein zweiter generativer vortrainierter Transformer (GPT21, GPT22, GPT23) abhängig von den zweiten Eingabedaten angesteuert, um die zweiten Ausgabedaten zu erzeugen. Schließlich wird die Fahrzeugfunktionalität (FKT1, FKT2, FKT3, FKT4) abhängig von den zweiten Ausgabedaten betrieben.

## Beschreibung

Die Erfindung betrifft ein Verfahren zum Betreiben eines Fahrzeugs. Die Erfindung betrifft eine Vorrichtung und Computerprogrammprodukt zum Betreiben eines Fahrzeugs.

Aus dem Stand der Technik sind insbesondere neuronale Netzwerke bekannt, die dazu ausgebildet sind, Fahrzeugfunktionalitäten anzusteuern. Beispielsweise offenbart die DE 10 2004 004 168 A1 ein solches neuronales Netzwerk. Das neuronale Netzwerk ist dazu ausgebildet, eine Warnblickfunktion oder Richtungsblinkfunktion anzusteuern, wenn ein vorgegebenes Ereignis eintritt.

Die DE 10 2017 210 156 B4 offenbart eine Vorrichtung zum Ansteuern eines Fahrzeugmoduls, bei der eine künstliche Intelligenz zum Einsatz kommt. Die künstliche Intelligenz ist insbesondere ein neuronales Netzwerk und dazu ausgebildet, als Teil einer Auswertevorrichtung Sensorsignale auszuwerten und das Fahrzeugmodul entsprechend anzusteuern.

Aus der DE 10 2017 210 151 A1 ist eine weitere Vorrichtung zum Ansteuern eines Fahrzeugmoduls bekannt. Die Vorrichtung verwendet eine künstliche Intelligenz, insbesondere ein neuronales Netzwerk, um die Funktion des Fahrzeugmoduls zu überwachen.

Ferner ist aus der DE 10 2021 132 588 A1 ein neuronales Netzwerk bekannt, das dazu ausgebildet ist, ein Antriebssystem eines Fahrzeugs zu steuern. Das neuronale Netzwerk ist dazu ausgebildet, das Antriebssystem des Fahrzeugs in Abhängigkeit von Parametern der Emissionen des Fahrzeugs zu steuern.

Die Ausgaben von Maschinenlernverfahren, beispielsweise neuronaler Netzwerke, können wenig vorhersehbar sein, insbesondere, je allgemeiner das Modell, d.h. je vielfältiger die Ziele oder Einsatzzwecke des Models sind. So können beispielsweise Modelle, die zur Identifikation bestimmter Merkmale trainiert worden sind, aufgrund von Overfitting falsch positive oder schadhafte Ergebnisse liefern. Derartige Effekte, insbesondere eine gewisse Unvorhersehbarkeit, machen es schwer, Maschinenlernverfahren bei der Steuerung wichtiger Elemente einzusetzen, beispielsweise von Funktionen eines Fahrzeugs. Ferner können von Maschinenlernverfahren getroffene Entscheidungen manchmal nur schwer nachvollziehbar sein. Diese Nachteile äußern sich desto stärker, je universeller und/oder größer die künstliche Intelligenz ist. In Bezug auf einen Einsatz künstlicher Intelligenz in Fahrzeugen können Nachteile resultieren, weil in Fahrzeugen eine sehr hohe Diversität an möglichen Zielen verfolgt werden kann, die mit einer sogenannten schwachen künstlichen Intelligenz nur schwer bedient werden können.

Aufgabe der Erfindung ist es daher, ein Verfahren, eine Vorrichtung und ein Computerprogrammprodukt zum Betreiben eines Fahrzeugs anzugeben, welche die vorgenannten Nachteile des bekannten Stands der Technik überwinden.

Die Aufgabe wird durch die Gegenstände der unabhängigen Ansprüche gelöst. Vorteilhafte Ausführungsformen werden unter anderem in den abhängigen Ansprüchen beschrieben. Es wird darauf hingewiesen, dass zusätzliche Merkmale eines von einem unabhängigen Patentanspruch abhängigen Patentanspruchs ohne die Merkmale des unabhängigen Patentanspruchs oder nur in Kombination mit einer Teilmenge der Merkmale des unabhängigen Patentanspruchs eine eigene und von der Kombination sämtlicher Merkmale des unabhängigen Patentanspruchs unabhängige Erfindung bilden können, die zum Gegenstand eines unabhängigen Anspruchs, einer Teilungsanmeldung oder einer Nachanmeldung gemacht werden kann. Dies gilt in gleicher Weise für in der Beschreibung beschriebene technische Lehren, die eine von den Merkmalen der unabhängigen Patentansprüche unabhängige Erfindung bilden können.

Bei dem vorgeschlagenen Verfahren zum Betreiben eines Fahrzeugs wird ein mittels zumindest einer Fahrzeugfunktionalität zu erreichendes Ziel ermittelt und es werden abhängig von dem Ziel erste Eingabedaten erzeugt. Ein erster generativer vortrainierter Transformer wird abhängig von den ersten Eingabedaten betrieben, um erste Ausgabedaten zu erzeugen. Abhängig von den ersten Ausgabedaten werden zweite Eingabedaten erzeugt. Bei einer ersten Ausführungsform wird der erste generative vortrainierte Transformer abhängig von zweiten Eingabedaten betrieben, um zweite Ausgabedaten zu erzeugen. Alternativ oder zusätzlich wird zumindest ein zweiter generativer vortrainierter Transformer abhängig von den zweiten Eingabedaten angesteuert, um die zweiten Ausgabedaten zu erzeugen. Schließlich wird die Fahrzeugfunktionalität abhängig von den zweiten Ausgabedaten betrieben.

Das Ziel kann einen Zielwert umfassen oder Zielwert sein, der angestrebt, erreicht oder gehalten werden soll. Beispielsweise kann es sich bei einem Zielwert um einen Zielwert für eine Fahrzeugfunktionalität handeln, insbesondere ein Sollwert. Beispielsweise kann der Zielwert eine Geschwindigkeit des Fahrzeugs, eine Spurführung, ein Folgen eines bestimmten, zum Beispiel wählbaren Objektes, das Befolgen einer Navigationsroute oder eine Temperatur im Fahrzeuginnenraum betreffen. Die Ermittlung des Ziels kann insbesondere darin bestehen, das Ziel zu definieren, beispielsweise in Form eines Zielwertes, der von einem Nutzer vorgegeben wird, oder in beliebiger Form einzulesen. Das Ziel kann als entsprechende Zieldaten ermittelt oder verarbeitet werden. Die ersten Eingabedaten können diese Zieldaten sein oder abhängig von Zieldaten in einem zweckmäßigen Zwischenschritt ermittelt werden.

Der Begriff "generativer vortrainierte Transformer werden auch Generative Pretrained Transformer oder GPT genannt. Der erste generative vortrainierte Transformer und/oder die zweiten generativen vortrainierten Transformer können jeweils auch ein neuronales Netz sein, umfassen oder ein Teil eines neuronalen Netzwerkes bilden. Dabei kann das neuronale Netz bzw. die betreffende Teile, zum Beispiel Schichten des neuronalen Netzwerkes, gemäß einem oder mehrer für generative vortrainierte Transformer typischer Merkmale, insbesondere hinsichtlich ihrer Architektur und Parameter, ausgebildet sein.

Insbesondere handelt es sich bei dem ersten und/oder zweiten generativen vortrainierten Transformer um ein generatives, insbesondere statistisches Modell, insbesondere ein auf einen bestimmten Typ des Fahrzeugs, das bestimmte Fahrzeug, einen bestimmen Nutzer und/oder Betreiber des Fahrzeugs, nachtrainiertes Modell. Alternativ sind der erste und/oder zweite generativen vortrainierten Transformer ist auf Basis eines solchen nachtrainierten Modells aufgebaut und/oder werden von einem solchen gesteuert. Insbesondere kann das nachtrainierte Modell ein Sprachmodell oder ein Modell mit Sprachunterstützung, insbesondere ein sogenanntes Large-Language-Modell umfassen oder sein.

Der Begriff "Betreiben" des (ersten, zweiten, dritten) generativen vortrainierten Transformers kann ein Stimulieren, Einstellen (zum Beispiel Verändern des Betriebsmodus und/oder Einstellungen) und/oder Prompten des (jeweiligen) generativen vortrainierten Transformers umfassen. Das Betreiben erfolgt insbesondere durch Bereitstellen bzw. Einlesen der jeweiligen Eingabedaten an der Eingangsschicht.

Der Begriff "Betreiben" der Fahrzeugfunktionalität kann ein Ansteuern, Einstellen (zum Beispiel Verändern des Betriebsmodus und/oder Einstellungen), ein Pausieren, Deaktivieren oder (zum Beispiel ein kurzzeitiges) Aussetzen oder Anpassen einer (sonstig fälligen) Aktion, Auslösung bzw. Reaktion der Fahrzeugfunktion umfassen oder sein.

Das Betreiben der Fahrzeugfunktionalität kann ein fallspezifisches Anpassen qualitativer und/oder quantitativer Parameter der Fahrzeugfunktionalität umfassen oder sein. Dies kann insbesondere permanent oder bis auf Wiederruf erfolgen. Unter dem Begriff "Fahrzeugfunktionalität" können ein oder mehrere Leistungsmerkmale, insbesondere Features, einer oder mehrerer jeweiligen Fahrzeugfunktionalitäten oder einer Kombination solcher aufgefasst werden.

Der Begriff "Steuereinheit" wird im Rahmen des vorliegenden Dokuments als eine (zumindest teilweise separate, zum Beispiel für eine Fahrzeugfunktionalität vorgesehene) Recheneinheit (etwa ein Steuergerät oder ein Teil von einem solchen) oder ein Softwaremodul, eine oder einen Teil einer Recheneinheit (zum Beispiel ein Prozessor, Hardwaremodul etwa innerhalb einer Integrationssteuereinheit) aufgefasst.

Das vorgeschlagene Verfahren erfolgt in zwei wesentlichen Schritten. Zunächst werden in Form der ersten Ausgabedaten aus dem ermittelten Ziel Steuerungsdaten, zum Beispiel ein Stimulus oder ein Prompt erzeugt, die dann in Form der zweiten Eingabedaten weiterverarbeitet werden, um die Fahrzeugfunktionalität zu betreiben.

Bei der ersten alternativen Ausführungsform des Verfahrens betreibt der erste generative vortrainierte Transformer sich selbst, in dem dieser beispielsweise auf Grundlage des Ziels (zum Beispiel Zieldaten) die Steuerungsdaten (zum Beispiel Stimulus, Einstellungsdaten, Prompt) erzeugt, die einen Teil der Eingabe für denselben ersten generativen vortrainierten Transformer bilden. Der ersten generative vortrainierte Transformer kann dabei, zumindest in einem ersten Durchlauf, einen Teil dieser Eingabe für sich selbst erzeugen, zumindest für einen weiteren, zweiten Durchlauf. Das können die ersten Ausgabedaten (auch aufzufassen als Daten auf Basis der ersten Ausgabedaten), die als zweite Eingabedaten (d.h. Input), insbesondere für demselben oder einem anderen Eingang (zum Beispiel Teil der Eingangsschicht) des ersten vortrainierten Transformers verwendet werden.

Bei der zweiten Ausführungsform des Verfahrens betreibt der erste generative vortrainierte Transformer zumindest einen oder bevorzugt mehrere der zweiten generativen vortrainierten Transformer. Ein oder mehrere (der einen oder mehreren) zweiten generativen vortrainierten Transformer kann bzw. können insbesondere (jeweils, auswahlweise) ein (vergleichsweise eng) spezialisierte generative vortrainierte Transformer sein. Beispielsweise kann bzw. können diese auf das Betreiben einer bestimmten Fahrzeugfunktionalität spezialisiert, insbesondere optimiert sein oder zumindest einen Teil der Fahrzeugfunktionalität ausführen bzw. bilden.

Bevorzugt können die beiden vorgenannten Ausführungsformen des vorgeschlagenen Verfahrens untereinander beliebig kombiniert werden. Dadurch können die insgesamt resultierenden Vorteile vergrößert werden.

Der erste generative vortrainierte Transformer kann auf einer von den zu betreibenden Fahrzeugfunktionalitäten und/oder von konkreten Steuerungsbefehlen abstrahierten Ebene, beispielsweise als Agent im Sinne des Nutzers, betrieben werden.

Einer der Vorteile des vorgeschlagenen Verfahrens liegt darin, dass durch die sozusagen zweistufige Ausführung die Ausgaben der generativen vortrainierten Transformer und somit die Ergebnisse des Verfahrens besser vorhersehbar und nachvollziehbar sind. Dadurch können eventuelle Risiken beim Einsatz künstlicher Intelligenz in dem Fahrzeug besser beherrscht werden. Insbesondere ermöglicht die zweistufige Ausführung den Einsatz der künstlichen Intelligenz bei vergleichsweise kritischen, eine hohe Präzision oder Verlässlichkeit erfordernden Fahrzeugfunktionalitäten.

Das im vorliegenden Dokument beschriebe Funktionsprinzip und die Merkmale der Vorrichtung bzw. der beschriebenen Architektur haben darüber hinaus den Vorteil, dass der Nutzer, beispielsweise ein Fahrzeuginsasse, mit einer zentralen Instanz und auf einer abstrakten Ebene bzw. durch abstrakte Ziele agiert, insbesondere interagiert. Dadurch kann es für den Fahrzeuginsassen beispielsweise ermöglicht werden vergleichsweise abstrakte Ziele, anstelle konkreter Steuerungsbefehle für konkrete Fahrzeugfunktionalitäten, zu adressieren bzw. diese direkt bzw. manuell zu steuern. Insbesondere kann der erste generative vortrainierte Transformer - mit oder ohne Zutun des Fahrzeuginsassen - abhängig von dem Ziel eine oder mehrere Teilaufgaben bilden. Dadurch kann die Benutzerfreundlichkeit der Vorrichtung bzw. der einzelnen Fahrzeugfunktionalitäten weiter erhöht werden.

Bei einer weiteren Ausführungsform ist der erste generative vortrainierte Transformer dazu ausgebildet, die ersten Ausgabedaten unter Berücksichtigung von Fahrsituationsdaten, die einer das Fahrzeug betreffende Fahrsituation entsprechen, von Insassenzustandsdaten, die dem Zustand eines Fahrzeuginsassen entsprechen, und/oder von Fahrzeugzustandsdaten, die dem Zustands des Fahrzeugs entsprechen, insbesondere dem Zustand einer oder mehrerer Vorrichtungen oder Fahrzeugfunktionalitäten des Fahrzeugs, zu erzeugen. Die Fahrsituation, der Zustand des Fahrzeuginsassen und/oder der Zustand des Fahrzeugs können beispielsweise durch einen Sensor des Fahrzeugs erfasst und in Form der Fahrsituationsdaten oder der Insassenzustandsdaten bereitgestellt werden, unter deren Berücksichtigung die ersten Ausgabedaten erzeugt werden. Der Begriff "Fahrsituation" kann im Rahmen des vorliegenden Dokuments zum Beispiel als eine bestimmte durch eine Anordnung, Aktion oder Interaktion von Verkehrsteilnehmer oder durch bestimmte Fahrparameter von Verkehrsteilnehmern gekennzeichnete Situation verstanden werden, insbesondere auf der Betrachtungsebene von bestimmten Objekten. Insbesondere unterscheidet sich die Bedeutung des Begriffs "Fahrsituation" daher von einer häufig umgangssprachlich verwendeten Bedeutung des Begriffs "Verkehrssituation" welche vielmehr den zusammenfassenden, allgemeinen und/oder statistischen Kategorien wie etwa "freier Verkehr", "dichter Verkehr", "zähfließender Verkehr", "Stau", "Stauende" etc. entspricht.

Der Begriff "Fahrsituation" kann im Kontext dieses Dokuments ferner auch als Parameter der Fahrsituation aufgefasst werden. Ein oder mehrere Parameter der Fahrsituation können ein bestimmtes Muster (auch zu verstehen als ein Datenmuster), zum Beispiel ein Muster kennzeichnend für eine Anordnung und/oder Geschwindigkeit von Objekten und/oder ein Muster der Parameter der Fahrsituation, kennzeichnen, insbesondere repräsentieren. Auch kann die Fahrsituation durch ein räumliches Muster der sogenannten Freiräume in der Umgebung des Fahrzeugs bzw. durch entsprechende Parameter gekennzeichnet sein.

Bevorzugt ist die zumindest eine Fahrsituation gekennzeichnet durch eines oder mehrere der nachfolgend aufgezählten Merkmale:
- eine bestimmte räumliche Verteilung der Verkehrsteilnehmer und/oder der Bewegungsparameter der Verkehrsteilnehmer, insbesondere ein Anordnungsmuster der Verkehrsteilnehmer in der Umgebung des Fahrzeugs;
- eine bestimmte räumliche Verteilung unbeweglicher Objekte in der Umgebung des Fahrzeugs;
- eine relative Position und/oder Bewegung zu bestimmten Arten von Spurmarkierungen, Verkehrszeichen, Lichtzeichenanlagen;
- eine Information über die Vorfahrt des Fahrzeugs, insbesondere gegenüber tatsächlichen Verkehrsteilnehmern und/oder Verkehrsteilnehmern, die zumindest potentiell aus bestimmten Richtungen, zum Beispiel einer querenden Straße von rechts oder von links kommen können;
- eine Information zu einer, zum Beispiel einen Grenzwert überschreitenden, Handlung eines Verkehrsteilnehmers in der Umgebung des Fahrzeugs, wie zum Beispiel ein Hupen, Lichthupen, Drängeln, Überholen des Fahrzeugs, ein Überholversuch und dergleichen.

Ferner kann die Fahrsituation durch einen oder mehrere Parameter im Zusammenhang mit relevanten Verkehrsregeln, Verkehrszeichen, Vorfahrten, Ampeln und/oder Ampelphasen gekennzeichnet sein.

Die in dem vorliegenden Dokument beschriebene Fahrsituation kann eine beliebige Kombination aus den beschriebenen Merkmalen umfassen.

Als ein oder mehrere Parameter der Fahrsituation kann auch eine zeitliche und/oder räumliche Veränderungscharakteristik, insbesondere ein Gradient, etwa ein zeitlicher und/oder räumlicher Gradient des jeweiligen Parameters, insbesondere Parameterwerts gelten bzw. berücksichtigt werden.

Beispielsweise können auch Fahrsituationsparameter basierend auf Umfeldsensordaten und/oder von einer zum Fahrzeug übermittelten Informationen berücksichtigt werden, zum Beispiel Informationen, die von einem weiteren Verkehrsteilnehmer, mittels einer Car-2-Car oder Car-2-X übermittelt wurden. Dabei kann es sich bei den Umfeldsensordaten um auf eine bestimmte Art und Weise verarbeitete Daten eines umfelderfassenden Sensors insbesondere eines Sensorsystems zumindest eines Fahrzeugs handeln.

Alternativ oder zusätzlich kann bei dem Verfahren eine Verkehrsregelinformation, kennzeichnend für eine oder mehrere Verkehrsregeln ermittelt und berücksichtigt werden. Die Verkehrsregelinformation kann zum Beispiel die gesetzlichen Regelungen und/oder Logik entsprechen. Die Verkehrsregeln können zum Beispiel für den Aufenthaltsort, insbesondere Land, Provinz, Ort des Fahrzeugs spezifisch sein.

Unter dem Zustand des Fahrzeugs werden zum Beispiel eine oder mehrere odometrische Parameter verstanden, zum Beispiel Bewegungsparameter wie die momentane Geschwindigkeit oder die momentane Längs- und Querbeschleunigung des Fahrzeugs aufgefasst. Aber auch weitere Informationen können als Zustand des Fahrzeugs aufgefasst werden, beispielsweise ein Füllstand bzw. Ladezustand eines oder mehrerer Energiespeicher des Fahrzeugs oder Fahrwerksparameter. Ferner kann der Betriebszustand, insbesondere Betriebsmodus oder ein aktueller Fahrmodus des Fahrzeugs ermittelt und berücksichtigt werden.

Beispielsweise wird der erste generative vortrainierte Transformer auch abhängig von den beschriebenen Daten betrieben. Dabei können die ersten Ausgabedaten erzeugen werden, die den jeweiligen Kontext berücksichtigen. Dadurch kann das Betreiben des Fahrzeugs, insbesondere einer Fahrzeugfunktionalität besser anpassbar an die Situation, präziser bzw. noch zuverlässiger erfolgen.

Bei einer weiteren Ausführungsform ist der zweite generative vortrainierte Transformer dazu ausgebildet ist, die Fahrzeugfunktionalität zu betreiben, insbesondere anzusteuern, einzustellen und/oder auszuführen. Bei dieser Ausführungsform kann der zweite generative vortrainierte Transformer zum Beispiel Steuerungsdaten erzeugen, die unmittelbar oder mittelbar, insbesondere nach einem zweckmäßigen Zwischenschritt, an die Fahrzeugfunktionalität übermittelt und/oder von dieser eingelesen werden.

Bei einer weiteren Ausführungsform werden zwei oder mehr zweite generative vortrainierte Transformer abhängig von den zweiten Eingabedaten betrieben werden, um jeweils zweite Ausgabedaten zu erzeugen. Abhängig von den zweiten Ausgabedaten werden dritte Eingabedaten erzeugt. Der erste generative vortrainierte Transformer wird abhängig von den dritten Eingabedaten betrieben, um dritte Ausgabedaten zu erzeugen. Die Fahrzeugfunktionalität wird abhängig von den dritten Ausgabedaten betrieben. Dies ermöglicht es dem ersten generativen vortrainierten Transformer zu prüfen, ob die Ausgaben des einen oder der mehreren zweiten generativen vortrainierten Transformer einzeln oder in Kombination zweckmäßig, sinnvoll und/oder sachdienlich sind, um das Ziel zu erreichen und/oder ungefährlich sind. Insbesondere kann der erste vortrainierter Transformer dazu ausgebildet sein, nicht hinreichend zweckmäßige und/oder kritischen Ausgaben auszufiltern und/oder zu zweckmäßigen und/oder unkritischen Ausgaben verarbeiten. Der erste generative vortrainierte Transformer kann auch dazu ausgebildet sein, die Rolle einer Kontrollinstanz zu erfüllen. Beispielsweise können dabei Ausgaben, die als Grundlage zum Ausführen der Fahrzeugfunktionalität verwendet werden, präziser und/oder besser vorhersehbarer gemacht werden. Außerdem können dabei Risiken im Zusammenhang mit dem Einsatz künstlicher Intelligenz in dem Fahrzeug weiter reduziert werden.

Bei einer weiteren Ausführungsform ist der erste generative vortrainierte Transformer dazu ausgebildet, die dritten Ausgabedaten Berücksichtigung von Fahrsituationsdaten, die einer das Fahrzeug betreffende Fahrsituation entsprechen, von Insassenzustandsdaten, die dem Zustand eines Fahrzeuginsassen entsprechen, und/oder von Fahrzeugzustandsdaten, die dem Zustands des Fahrzeugs entsprechen, insbesondere dem Zustand einer oder mehrerer Vorrichtungen oder Fahrzeugfunktionalitäten des Fahrzeugs, zu erzeugen. Bei dieser Ausführungsform bearbeitet und/oder filtert der erste generative vortrainierte Transformer die Ausgaben der zweiten generativen vortrainierten Transformer unter Berücksichtigung des situativen Kontexts, beispielsweise der momentanen Fahrsituation des Fahrzeugs. Dies erhöht die Zuverlässigkeit, mit der die Fahrzeugfunktionalität ausgeführt wird, noch weiter.

Bei einer weiteren Ausführungsform ist die Fahrzeugfunktionalität eine die Bewegung des Fahrzeugs beeinflussende Fahrzeugfunktionalität, insbesondere ein Antriebssystem, ein Bremssystem und/oder ein Lenksystem und/oder Manöverausführungssystem. Beispielsweise kann ein Antriebssystem angesteuert werden, um das Antriebssystem kraftstoffsparender zu betreiben. Insbesondere wird aber auch ein Aktor des Fahrzeugs direkt angesteuert, um die Bewegung des Fahrzeugs zu beeinflussen, beispielsweise das Fahrzeug zu beschleunigen bzw. abzubremsen.

Bei einer weiteren Ausführungsform ist die Fahrzeugfunktionalität ein Navigationssystem und/oder eine auf das assistierte, automatisierte oder autonome Fahren des Fahrzeugs bezogene Fahrzeugfunktionalität. Unter assistiertem Fahren werden in diesem Dokument die Automatisierungsgrade 1 und 2 gemäß der Bundesanstalt für Straßenwesen verstanden. Unter automatisiertem Fahren werden in diesem Dokument die Automatisierungsgrade 2, 2+ und 3, unter gemäß der Bundesanstalt für Straßenwesen verstanden. Unter autonomem Fahren werden in diesem Dokument die Automatisierungsgrade 4 und 5 gemäß der Bundesanstalt für Straßenwesen verstanden. Fahrassistenzsysteme im Sinne dieses Dokumentes sind beispielsweise ein Abstandsregeltempomat, ein Spurhalteassistent, eine Einparkhilfe, ein Längsführungsassistent oder eine Kombination der vorgenannten Fahrassistenzsysteme, zum Beispiel ein Stauassistent.

Beispielsweise kann im Ergebnis des Verfahrens als die Fahrzeugfunktionalität ein bestimmtes Fahrassistenzsystem aktiviert und/oder deaktiviert werden. Alternativ oder zusätzlich kann auch bei dieser Ausführungsform ein Aktor des Fahrzeugs direkt angesteuert werden, um das assistierte, automatisierte bzw. das autonome Fahren des Fahrzeugs zu ermöglichen.

Bei einer weiteren Ausführungsform ist die Fahrzeugfunktionalität ein Multimediasystem, ein Infotainmentsystem, ein Personalisierungssystem und/oder eine Komfortfunktion des Fahrzeugs, insbesondere eine Klimaanlage, eine Belüftung, eine Beduftung und/oder eine oder mehrere verstellbaren Vorrichtungen im Fahrzeuginnenraum, insbesondere eines oder mehrere Segmente eines Sitzes oder eines Lenkrads. Diese Ausführungsform erlaubt es dem Nutzer, besonders einfach eine Anzahl von praktischen und Komfortfunktionen zu betreiben, insbesondere zu steuern, zu bedienen und/oder passend zum Kontext und/oder zu individuellen Bedürfnissen einzustellen. Insbesondere kann diese Ausführungsform die Handhabung von Funktionalitäten unterschiedlicher Arten zu verbessern.

Beispielsweise können dabei zumindest zwei oder drei Fahrzeugfunktionalitäten bzw. Fahrzeugfunktionalitäten von zumindest zwei oder drei unterschiedlicher Arten mehr oder minder zentral und mit einem vergleichsweise abstrakten bzw. allgemeinen Steuerungsdaten betrieben werden.

Bei einer weiteren Ausführungsform ist der erste generative vortrainierte Transformer abhängig von Fahrsituationsdaten, die einer das Fahrzeug betreffende Fahrsituation entsprechen, von Insassenzustandsdaten, die dem Zustand eines Fahrzeuginsassen entsprechen, und/oder von Fahrzeugzustandsdaten, die dem Zustands des Fahrzeugs entsprechen, insbesondere dem Zustand einer oder mehrerer Vorrichtungen oder Fahrzeugfunktionalitäten des Fahrzeugs, nachtrainierbar. Alternativ oder Zusätzlich wird der erste generative vortrainierte Transformer abhängig von Fahrsituationsdaten, die einer das Fahrzeug betreffende Fahrsituation entsprechen, von Insassenzustandsdaten, die dem Zustand eines Fahrzeuginsassen entsprechen, und/oder von Fahrzeugzustandsdaten, die dem Zustands des Fahrzeugs entsprechen, insbesondere dem Zustand einer oder mehrerer Vorrichtungen oder Fahrzeugfunktionalitäten des Fahrzeugs, nachtrainiert. Durch das Nachtrainieren abhängig von oder auf Grundlage der Fahrsituationsdaten bzw. der Zustandsdaten kann das Ergebnis des Verfahrens besser an den jeweiligen Nutzer, Fahrzeuge, Kontexte, Nutzungsarten bzw. Nutzungsszenarien des Fahrzeugs angepasst und/oder die Qualität, Güte, Präzision des Ergebnisses gesteigert werden, zum Beispiel wird die Ausgabe des ersten generativen vortrainierten Transformers verbessert. Zusätzlich wird die Zuverlässigkeit, mit der die Fahrzeugfunktionalität ausgeführt wird, noch weiter gesteigert.

Die Erfindung betrifft zudem eine Vorrichtung zum Betreiben eines Fahrzeugs. Die Vorrichtung umfasst eine erste Steuereinheit, die dazu ausgebildet ist, ein mittels zumindest einer Fahrzeugfunktionalität zu erreichendes Ziel zu ermitteln und abhängig von dem Ziel erste Eingabedaten zu erzeugen und eine zweite Steuereinheit, die dazu ausgebildet ist, einen ersten generativen vortrainierten Transformer zu betreiben, um abhängig von den ersten Eingabedaten erste Ausgabedaten zu erzeugen, und abhängig von den ersten Ausgabedaten zweite Eingabedaten zu erzeugen. Entweder ist die zweite Steuereinheit dazu ausgebildet ist, den ersten generativen vortrainierten Transformer zu betreiben, um abhängig von den zweiten Eingabedaten zweite Ausgabedaten zu erzeugen. Alternativ oder zusätzlich umfasst die Vorrichtung zumindest eine dritte Steuereinheit, die dazu ausgebildet ist zumindest einen zweiten generativen vortrainierten Transformer abhängig von den zweiten Eingabedaten zu betreiben, um die zweiten Ausgabedaten zu erzeugen. Entweder die zweite Steuereinheit und/oder die dritte Steuereinheit sind dazu ausgebildet sind, die Fahrzeugfunktionalität abhängig von den zweiten Ausgabedaten zu betreiben. Bei einer ersten Ausführungsform ist die zweite Steuereinheit dazu ausgebildet, den ersten generativen vortrainierten Transformer zu betreiben, um abhängig von den zweiten Eingabedaten zweite Ausgabedaten zu erzeugen. Bei einer zweiten Ausführungsform umfasst die Vorrichtung zumindest eine dritte Steuereinheit, die dazu ausgebildet ist zumindest einen zweiten generativen vortrainierten Transformer zu betreiben, um abhängig von den zweiten Eingabedaten die zweiten Ausgabedaten zu erzeugen. Dabei sind die zweite Steuereinheit und/oder die dritte Steuereinheit dazu ausgebildet sein, die Fahrzeugfunktionalität abhängig von den zweiten Ausgabedaten zu betreiben. Dabei kann ein erster Teil der zweiten Ausgabedaten von einem oder mehreren zweiten generativen vortrainierten Transformer erzeugt werden und/oder ein zweiter Teil der zweiten Ausgabedaten von einem oder mehreren zweiten generativen vortrainierten Transformer erzeugt werden.

Die Vorrichtung hat dieselben Vorteile wie das beanspruchte Verfahren. Insbesondere kann die Vorrichtung mit den Merkmalen der auf das Verfahren gerichteten abhängigen Ansprüche weitergebildet werden. Ferner kann das oben beschriebene Verfahren mit Merkmalen weitergebildet werden, die in diesem Dokument im Zusammenhang mit der Vorrichtung beschrieben sind.

Die Erfindung betrifft ferner ein Computerprogrammprodukt. Das Computerprogrammprodukt umfasst ein Computerprogramm, das dazu ausgebildet ist, das vorbeschriebene Verfahren auszuführen, wenn das Computerprogramm auf einer oder mehreren Steuereinheiten ausgeführt wird.

Das Computerprogrammprodukt hat dieselben Vorteile wie das beanspruchte Verfahren und die beanspruchte Vorrichtung. Insbesondere kann das Computerprogrammprodukt mit den Merkmalen der auf das Verfahren oder die Vorrichtungen gerichteten abhängigen Ansprüche weitergebildet werden. Ferner können das oben beschriebene Verfahren und die oben beschriebene Vorrichtung mit Merkmalen weitergebildet werden, die in diesem Dokument im Zusammenhang mit dem Computerprogrammprodukt beschrieben sind.

Gemäß einer Ausführungsform umfasst das Computerprogramm einen ersten generativen vortrainierten Transformer und/oder zumindest einen zweiten generativen vortrainierten Transformer, insbesondere das jeweilige vortrainierte Modell, und/oder Logik und/oder Daten zum Trainieren, insbesondere Nachtrainieren und/oder zum Betreiben des ersten und/oder zweiten generativen vortrainierten Transformers.

Das Computerprogrammprodukt kann als ein Update eines bisherigen Computerprogramms ausgebildet sein, welches beispielsweise im Rahmen einer Funktionserweiterung, beispielsweise im Rahmen eines sogenannten "Remote Software Update", insbesondere mittels eine Datenverbindung, auf Steuereinheiten des Fahrzeugs aufgespielt wird.

Ausführungsbeispiele der Erfindung werden im Folgenden anhand der Figuren näher erläutert. Darin zeigen:
- Figur 1: in schematischer Darstellung eine Vorrichtung zum Betreiben eines Fahrzeugs;
- Figur 2: in einer weiteren schematischen Darstellung die Vorrichtung zum Betreiben eines Fahrzeugs;
- Figur 3: einen Ablaufplan eines Verfahrens zum Betreiben des Fahrzeugs gemäß einem ersten Ausführungsbeispiel;
- Figur 4: einen Ablaufplan eines Verfahrens zum Betreiben des Fahrzeugs gemäß einem zweiten Ausführungsbeispiel; und
- Figur 5: einen Ablaufplan eines Verfahrens zum Betreiben des Fahrzeugs gemäß einem dritten Ausführungsbeispiel.

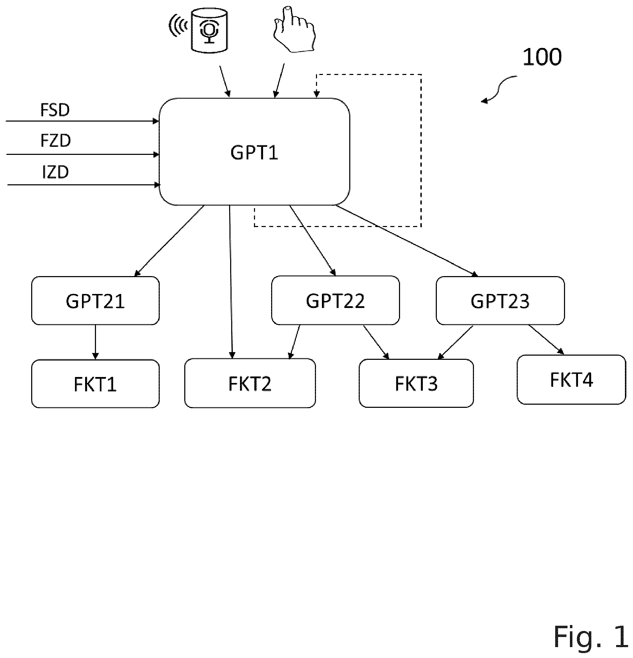

Figur 1 zeigt in schematischer Darstellung eine Vorrichtung 100 zum Betreiben eines Fahrzeugs 102.

Die Vorrichtung 100 dient dazu, ein durch einen Fahrzeugnutzer vorgebbares Ziel mittels einer oder mehreren Fahrzeugfunktionalitäten FKT1, FKT2, FKT3, FKT4 zu erfüllen, zum Beispiel möglichst zweckmäßig und/oder passend für den Fahrzeugnutzer. Ferner sind informationstechnische Wirkverbindungen zwischen generativen vortrainierten Transformer GPT1, GPT21, GPT22, GPT23 dargestellt. Die durchgezogenen Pfeile bezeichnen dabei eine bevorzugte vorgeschlagene Reihenfolge der Schritte. Ferner können die Pfeile auch bedeuten, dass die Einheit oder der Schritt, auf die oder den der Pfeil zeigt, abhängig von dem Ergebnis der Einheit oder des Schritts ausgeführt wird, an die oder dem der Pfeil beginnt. Das Verfahren kann insbesondere nur einen Teil der Einheiten bzw. des dargestellten Ablaufs und/oder auch weitere Schritte umfassen.

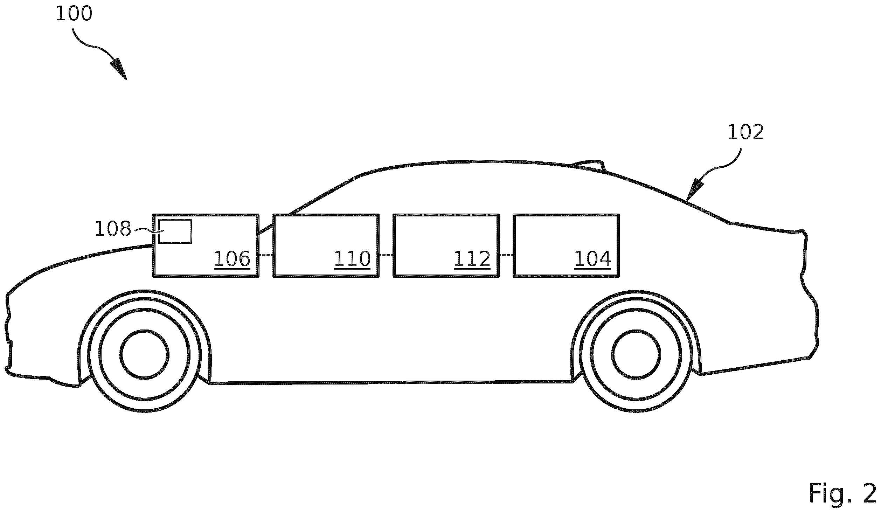

Figur 2 zeigt in einer weiteren schematischen Darstellung die Vorrichtung 100 zum Betreiben des Fahrzeugs 102.

In Figur 2 sind die eine oder mehrere Fahrzeugfunktionalitäten FKT1, FKT2, FKT3, FKT4 rein beispielhaft als eine einzige Funktionseinheit 104 des Fahrzeugs 102 dargestellt, die angesteuert wird, um die Fahrzeugfunktionalität auszuführen. Das Ziel kann insbesondere ein Anstreben, Erreichen oder Halten eines, zum Beispiel durch den Nutzer des Fahrzeugs bestimmbaren, Zielwerts umfassen oder sein. Das Ziel kann mehr oder minder konkret oder vergleichsweise abstrakt, zum Beispiel ohne Benennung einer konkreten Aktion und/oder Zielwerts, insbesondere in quantitativet Form, eingebbar oder formulierbar sein. Beispielsweise kann das Ziel abstrakt, insbesondere von einer Fahrzeugfunktionalität, zum Beispiel von der Benennung der Fahrzeugfunktionalität, abstrahiert sein.

Eine erste Steuereinheit 106 der Vorrichtung 100 ist dazu ausgebildet, das Ziel, zum Beispiel als Zieldaten, zu ermitteln und abhängig von dem Ziel erste Eingabedaten zu erzeugen. Rein beispielhaft umfasst die gezeigt erste Steuereinheit 106 eine Eingabeeinheit 108. Die Eingabeeinheit 108 ist dazu ausgebildet, den Empfang, das Einlesen oder das Verarbeiten des in einer Benutzeranfrage enthaltenen Ziels durch die erste Steuereinheit 106 zu ermöglichen. Die ersten Eingabedaten werden insbesondere in Textform bzw. in einer sprachlichen Form (etwa angelehnt an eine natürliche oder zumindest teilweise formalisierte Sprache) als ein Prompt erzeugt. Alternativ können die ersten Eingabedaten ist jeder Form erzeugt werden, die durch den ersten generative vortrainierte Transformer GPT1verarbeitbar ist, d.h. in einer Form, die als eine Eingabe für einen der generativen vortrainierten Transformer GPT1, GPT21, GPT22, GPT23 verwendbar ist. Alternativ oder zusätzlich können die ersten Eingabedaten, zum Beispiel die Textinformation bzw. Sprachinformation repräsentierenden oder sonstiger, auch in Form von Token erzeugt werden, die durch einen generativen vortrainierten Transformer GPT1, GPT21, GPT22, GPT23 verarbeitbar sind.

Eine zweite Steuereinheit 110 ist dazu ausgebildet, einen ersten generativen vortrainierten Transformer GPT1 zu betreiben. Der erste generative vortrainierte Transformer GPT1 ist darauf trainiert, die ersten Eingabedaten zu verarbeiten, um erste Ausgabedaten zu erzeugen. Die zweite Steuereinheit 110 ist ferner dazu ausgebildet, den ersten Ausgabedaten entsprechende zweite Eingabedaten zu erzeugen. Diese zweiten Eingabedaten entsprechen dabei einer Anweisung an weitere generative vortrainierte Transformer GPT21, GPT22, GPT23. Hierdurch wird das Ziel sozusagen in eine für Maschinenlernverfahren verständliche Form, zum Beispiel Sprache, transformiert oder übersetzt. Insbesondere bei abstrakt oder durch einen Fahrzeugnutzer formulierten Zielen führt eine solche Transformation zu besseren Ergebnissen, da hierdurch gegebenenfalls eine Vereinheitlichung erreicht wird.

Die in Figur 1 gezeigte Vorrichtung 100 umfasst rein beispielhaft eine dritte Steuereinheit 112, die dazu ausgebildet ist zumindest einen oder mehrere zweite generativen vortrainierten Transformer GPT21, GPT22, GPT23 zu betreiben. Die zweiten generative vortrainierte Transformer GPT21, GPT22, GPT23 sind darauf trainiert, die zweiten Eingabedaten zu verarbeiten, um zweite Ausgabedaten zu erzeugen. Die zweiten Ausgabedaten entsprechen, zum Beispiel mehr oder minder konkreten, direkten und/oder auf die konkrete Fahrzeugfunktionalität FKT1, FKT2, FKT3, FKT4 bezogenen, beispielsweise Steuerungsdaten an die Funktionseinheit 104, die Fahrzeugfunktionalität FKT1, FKT2, FKT3, FKT4 auszuführen.

Insbesondere sind die zweiten generativen vortrainierte Transformer GPT21, GPT22, GPT23, insbesondere verglichen mit dem ersten generativen vortrainierte Transformer GPT1, eng und/oder auf konkrete mit konkreten Funktionalitäten spezifische Aufgaben optimierte, spezialisierte generativer vortrainierter Transformer. Diese können zum Beispiel nur anhand eines reduzierten, zum Beispiel auf die Fahrzeugfunktionalität FKT1, FKT2, FKT3, FKT4 zugeschnittenen, Trainingsdatensatzes trainiert worden ist und/oder in Wesentlicher Hinsicht auf die auszuführende Fahrzeugfunktionalität FKT1, FKT2, FKT3, FKT4 begrenzt sein. Dadurch kann für den Fahrzeugnutzer, insbesondere den Fahrzeuginsassen die Notwendigkeit entfallen, konkrete Steuerungsbefehle zu formulieren. Vielmehr kann der Fahrzeugnutzer ein wesentlich abstrakteres Ziel vorgeben.

Die dritte Steuereinheit 112 kann auch dazu ausgebildet sein, die zweiten Ausgabedaten zu verarbeiten, um dritte Eingabedaten zu erzeugen, die wieder an die zweite Steuereinheit 110 übermittelt werden. Bei einer solchen Ausführungsform ist der erste generative vortrainierte Transformer GPT1 dazu eingerichtet, insbesondere trainiert und/oder nachtrainiert, die dritten Eingabedaten zu verarbeiten, um dritte Ausgabedaten zu erzeugen. Hierdurch können insbesondere beim Betreiben mehrerer zweiter generativer vortrainierter Transformer GPT21, GPT22, GPT23 die jeweiligen Ausgaben der zweiten generativen vortrainierten Transformer GPT21, GPT22, GPT23 verbessert und/oder vereinheitlicht bzw. besser an das Ziel angepasst werden. Die dritten Ausgabedaten bilden dann die Grundlage für das Ausführen der Fahrzeugfunktionalität FKT1, FKT2, FKT3, FKT4, beispielsweise sind die dritten Ausgabedaten ein Steuerungsdaten für die Funktionseinheit 104. Bei einem bevorzugten Ausführungsbeispiel wird zumindest ein Teil der Fahrzeugfunktionalität FKT1, FKT2, FKT3, FKT4 durch den einen oder mehrere (jeweilige) der zweiten generativen vortrainierten Transformer GPT21, GPT22, GPT23 ausgeführt.

Bei einer weiteren Ausführungsform ist der erste generative vortrainierte Transformer GPT1 darauf trainiert, die zweiten Eingabedaten selbst zu verarbeiten. Dies ist in der Figut 1 mit einem strichpunktierten Pfeil veranschaulicht. In anderen Worten, der erste generative vortrainierte Transformer GPT1 betreibt sich bei dieser Ausführungsform selbst, in dem er sich beispielsweise selbst stimuliert, steuert, oder promptet oder er verändert Einstellungen oder einen Betriebsmodus, um die zweiten Ausgabedaten zu erzeugen.

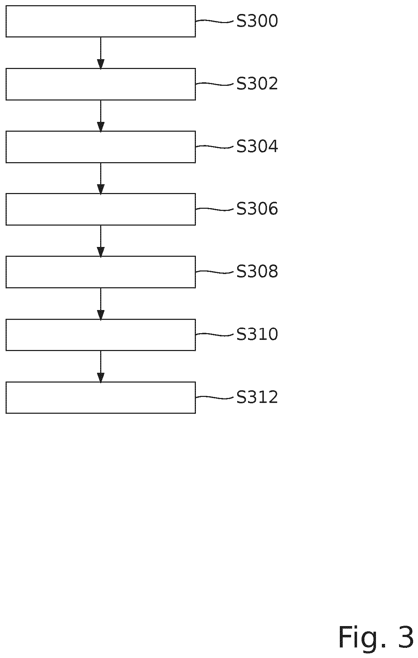

Figur 3 zeigt einen Ablaufplan eines Verfahrens zum Betreiben des Fahrzeugs 102 gemäß einem ersten Ausführungsbeispiel.

Das Verfahren wird in Schritt S200 gestartet. In Schritt S202 wird das Ziel ermittelt, beispielsweise auf Grundlage einer Benutzereingabe und/oder von Sensordaten. In Schritt S204 werden auf Grundlage des Ziels erste Eingabedaten erzeugt. Beispielsweise wird ein abstrakt formuliertes Ziel mit Hilfe eines Tokenizers in Token umgewandelt, die durch den ersten generativen vortrainierten Transformer GPT1 verarbeitbar sind. Bei einem anderen Beispiel wird eine Spracheingabe eines Benutzers empfangen und in Text umgewandelt, der dem ersten generativen vortrainierten Transformer GPT1 eingebbar ist.

In Schritt S206 erzeugt der erste generative vortrainierte Transformer GPT1 auf Grundlage der ersten Eingabedaten die ersten Ausgabedaten. Dabei verarbeitet der erste generative vortrainierte Transformer GPT1 ersten Eingabedaten gemäß seinem Training, um die ersten Ausgabedaten zu generieren. Abhängig von den ersten Ausgabedaten, insbesondere durch die Stimulation durch die erste Ausgabedaten werden dabei die zweite Eingabedaten derart erzeugt, dass diese dem ersten generativen vortrainierten Transformer GPT1 wiedereingebbar sind, zum Beispiel am selben und/oder an einem anderen Eingang.

Bei dem anhand von Figur 3 beschriebenen Verfahren, werden die zweiten Eingabedaten dem ersten generativen vortrainierten Transformer GPT1 in Schritt S208 als Eingabe, zum Beispiel als Stimulus, Prompt oder Steuerungsdaten, eingegeben. Der erste generative vortrainierte Transformer GPT1 verarbeitet die zweiten Eingabedaten gemäß seinem Training, um die zweiten Ausgabedaten zu erzeugen. In anderen Worten, in dem beschriebenen Ausführungsbeispiel promptet sich der erste generative vortrainierte Transformer GPT1 zumindest teilweise selbst, um die zweiten Ausgabedaten zu erzeugen. Dies kann mit einer oder mehreren Varianten kombiniert werden, bei welchen der erste generative vortrainierte Transformer GPT1 abhängig von den Ausgaben eines oder mehrerer der zweiten generativen vortrainierten Transformer GPT21, GPT22, GPT23 betrieben wird. Auf Grundlage der zweiten Ausgabedaten kann dann in Schritt S210 die Fahrzeugfunktionalität FKT1, FKT2, FKT3, FKT4 betrieben werden, zum Beispiel gesteuert und/oder ausgeführt. Beispielsweise werden Steuerungsdaten, spezifische Einstellungen bzw. Prompt für eine oder mehrere Funktionseinheiten 104 bzw. Fahrzeugfunktionalitäten FKT1, FKT2, FKT3, FKT3, FKT4 des Fahrzeugs 102 als die zweiten Ausgabedaten erzeugt, um die eine oder mehrere Fahrzeugfunktionalitäten FKT1, FKT2, FKT3, FKT4 zu betreiben. Das Verfahren wird in Schritt S212 beendet.

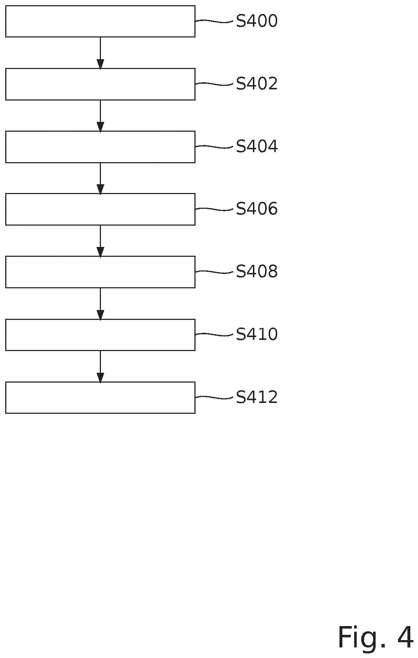

Figur 4 zeigt einen Ablaufplan eines Verfahrens zum Betreiben des Fahrzeugs 102 gemäß einem zweiten Ausführungsbeispiel.

Das Verfahren gemäß Figur 4 unterscheidet sich von dem Verfahren gemäß Figur 2 darin, dass einer oder mehrere der zweiten generativen vortrainierten Transformer GPT21, GPT22, GPT23 verwendet werden, um die Fahrzeugfunktionalität FKT1, FKT2, FKT3, FKT4 zu betreiben, d.h. zu steuern, einzustellen oder auszuführen.

Das Verfahren wird in Schritt S300 gestartet. Die Schritte S302 und S304 sind identisch zu den Schritten S202 und S204 gemäß Figur 2. In Schritt S306 erzeugt der erste generative vortrainierte Transformer GPT1 auf Grundlage der ersten Eingabedaten zwar ebenfalls die ersten Ausgabedaten. Im Gegensatz zu Schritt S206 gemäß Figur 2 werden bei dem Verfahren nach Figur 4 aber die zweiten Eingabedaten derart erzeugt, dass diese dem oder den zweiten generativen vortrainierten Transformern GPT21, GPT22, GPT23 wiedereingebbar sind. Die zweiten Eingabedaten werden dann dem oder den zweiten generativen vortrainierten Transformern GPT21, GPT22, GPT23 in Schritt S308 eingegeben. Die zweiten generativen vortrainierten Transformer GPT21, GPT22, GPT23 verarbeiten dann die zweiten Eingabedaten gemäß ihrem Training, um die zweiten Ausgabedaten zu erzeugen. Auf Grundlage dieser zweiten Ausgabedaten werden dann in Schritt S310 die eine oder mehrere Fahrzeugfunktionalitäten FKT1, FKT2, FKT3, FKT4 ausgeführt. Das Verfahren wird in Schritt S312 beendet.

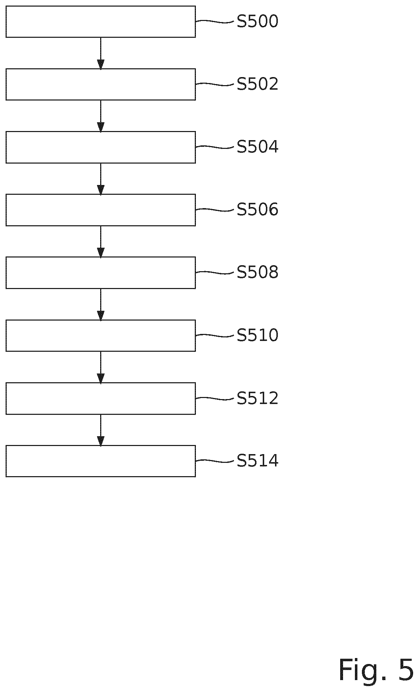

Figur 5 zeigt einen Ablaufplan eines Verfahrens zum Betreiben des Fahrzeugs 102 gemäß einem zweiten Ausführungsbeispiel.

Das Verfahren gemäß Figur 5 unterscheidet sich von dem Verfahren gemäß Figur 4 darin, dass die zweiten Ausgabedaten nicht direkt verwendet werden, um die Fahrzeugfunktionalität FKT1, FKT2, FKT3, FKT4 zu betreiben.

Das Verfahren wird in Schritt S400 gestartet. Die Schritte S402 bis S408 sind identisch zu den Schritten S302 bis S308 gemäß Figur 4. In Schritt S410 werden aus den zweiten Ausgabedaten dritte Eingabedaten zum Betreiben des ersten generativen vortrainierten Transformer GPT1 erzeugt. Diese werden dem ersten generativen vortrainierten Transformer GPT1 als Eingabe, d.h. als Stimulus, Prompt oder Einstellungen, eingegeben. In anderen Worten, können dabei die Ausgaben der verschiedenen spezialisierten zweiten generativen vortrainierten Transformer GPT21, GPT22, GPT23 zusammen verarbeitet, insbesondere gebündelt werden.

Die dritten Eingabedaten werden von dem ersten generativen vortrainierten Transformer GPT1 gemäß seinem Training verarbeitet, um dritte Ausgabedaten zu erzeugen. Diese dritten Ausgabedaten werden in Schritt S412 verwendet, um die Fahrzeugfunktionalität zu betreiben, d.h. zu steuern, einzustellen und/oder auszuführen. Das Verfahren wird dann in Schritt S414 beendet.

### Bezugszeichenliste

- 100: Vorrichtung
- 102: Fahrzeug
- 104: Funktionseinheit
- 106: Steuereinheit
- 108: Eingabeeinheit
- 110, 112: Steuereinheit
- GPT1, GPT21, GPT22, GPT23, GPT23: vortrainierter generativer Transformer
- FKT1, FKT2, FKT3, FKT4: Fahrzeugfunktionalitäten

## Patentansprüche

1. Verfahren zum Betreiben eines Fahrzeugs (102), bei dem
- ein mittels zumindest einer Fahrzeugfunktionalität (FKT1, FKT2, FKT3, FKT4) zu erreichendes Ziel ermittelt wird und abhängig von dem Ziel erste Eingabedaten erzeugt werden;
- ein erster generativer vortrainierter Transformer (GPT1) abhängig von den ersten Eingabedaten betrieben wird, um erste Ausgabedaten zu erzeugen;
- abhängig von den ersten Ausgabedaten zweite Eingabedaten erzeugt werden;
- der erste generative vortrainierte Transformer (GPT1) abhängig von zweiten Eingabedaten betrieben wird, um zweite Ausgabedaten zu erzeugen;
und/oder
- zumindest ein zweiter generativer vortrainierter Transformer (GPT21, GPT22, GPT23) abhängig von den zweiten Eingabedaten betrieben wird, um die zweiten Ausgabedaten zu erzeugen; und
- eine Fahrzeugfunktionalität (FKT1, FKT2, FKT3, FKT4) abhängig von den zweiten Ausgabedaten betrieben wird.

2. Verfahren nach Anspruch 1, wobei der erste generative vortrainierte Transformer (GPT1) dazu ausgebildet ist, die ersten Ausgabedaten unter Berücksichtigung von Fahrsituationsdaten (FSD), die einer das Fahrzeug (102) betreffende Fahrsituation entsprechen, von Insassenzustandsdaten (IZD), die dem Zustand eines Fahrzeuginsassen entsprechen, und/oder von Fahrzeugzustandsdaten (DZD), die dem Zustands des Fahrzeugs (102) entsprechen, insbesondere dem Zustand einer oder mehrerer Vorrichtungen oder Fahrzeugfunktionalitäten (FKT1, FKT2, FKT3, FKT4) des Fahrzeugs (102), zu erzeugen.

3. Verfahren nach Anspruch 1 oder 2, wobei der zweite generative vortrainierte Transformer (GPT21, GPT22, GPT23) dazu ausgebildet ist, die Fahrzeugfunktionalität (FKT1, FKT2, FKT3, FKT4) zu betreiben, insbesondere anzusteuern, einzustellen und/oder auszuführen.

4. Verfahren nach Anspruch 1 oder 2, wobei
- zwei oder mehr zweite generative vortrainierte Transformer (GPT21, GPT22, GPT23) abhängig von den zweiten Eingabedaten betrieben werden, um jeweils zweite Ausgabedaten zu erzeugen;
- abhängig von den zweiten Ausgabedaten dritte Eingabedaten erzeugt werden;
- der erste generative vortrainierte Transformer (GPT1) abhängig von den dritten Eingabedaten betrieben wird, um dritte Ausgabedaten zu erzeugen; und
- die Fahrzeugfunktionalität (FKT1, FKT2, FKT3, FKT4) abhängig von den dritten Ausgabedaten betrieben wird.

5. Verfahren nach Anspruch 4, wobei der erste generative vortrainierte Transformer (GPT1) dazu ausgebildet ist, die dritten Ausgabedaten unter Berücksichtigung von Fahrsituationsdaten (FSD), die einer das Fahrzeug (102) betreffende Fahrsituation entsprechen, von Insassenzustandsdaten (IZD), die dem Zustand eines Fahrzeuginsassen entsprechen, und/oder von Fahrzeugzustandsdaten (DZD), die dem Zustands des Fahrzeugs (102) entsprechen, insbesondere dem Zustand einer oder mehrerer Vorrichtungen oder Fahrzeugfunktionalitäten (FKT1, FKT2, FKT3, FKT4) des Fahrzeugs (102), zu erzeugen.

6. Verfahren nach einem der vorhergehenden Ansprüche, wobei die Fahrzeugfunktionalität (FKT1, FKT2, FKT3, FKT4) eine die Bewegung des Fahrzeugs (102) beeinflussende Fahrzeugfunktionalität (FKT1, FKT2, FKT3, FKT4) ist, insbesondere ein Antriebssystem, ein Bremssystem und/oder ein Lenksystem und/oder Manöverausführungssystem.

7. Verfahren nach einem der vorhergehenden Ansprüche, wobei die Fahrzeugfunktionalität (FKT1, FKT2, FKT3, FKT4) ein Navigationssystem und/oder eine auf das assistierte, automatisierte oder autonome Fahren des Fahrzeugs (102) bezogene Fahrzeugfunktionalität ist.

8. Verfahren nach einem der vorhergehenden Ansprüche, wobei die Fahrzeugfunktionalität (FKT1, FKT2, FKT3, FKT4) ein Multimediasystem, ein Infotainmentsystem, ein Personalisierungssystem und/oder eine Komfortfunktion des Fahrzeugs (102) ist, insbesondere eine Klimaanlage, eine Belüftung, eine Beduftung und/oder eine oder mehrere verstellbaren Vorrichtungen (100) im Fahrzeuginnenraum, insbesondere eines oder mehrere Segmente eines Sitzes oder eines Lenkrads.

9. Verfahren nach einem der vorhergehenden Ansprüche, wobei der erste generative vortrainierte Transformer abhängig von Fahrsituationsdaten (FSD), die einer das Fahrzeug (102) betreffende Fahrsituation entsprechen, von Insassenzustandsdaten (IZD), die dem Zustand eines Fahrzeuginsassen entsprechen, und/oder von Fahrzeugzustandsdaten (DZD), die dem Zustands des Fahrzeugs (102) entsprechen, insbesondere dem Zustand einer oder mehrerer Vorrichtungen oder Fahrzeugfunktionalitäten (FKT1, FKT2, FKT3, FKT4) des Fahrzeugs (102), nachtrainierbar ist oder nachtrainiert wird.

10. Vorrichtung (100) zum Betreiben eines Fahrzeugs (102), umfassend eine erste Steuereinheit (106), die dazu ausgebildet ist, ein mittels zumindest einer Fahrzeugfunktionalität (FKT1, FKT2, FKT3, FKT4) zu erreichendes Ziel zu ermitteln und abhängig von dem Ziel erste Eingabedaten zu erzeugen;
eine zweite Steuereinheit (110), die dazu ausgebildet ist, einen ersten generativen vortrainierten Transformer (GPT1) zu betreiben, um abhängig von den ersten Eingabedaten erste Ausgabedaten zu erzeugen, und abhängig von den ersten Ausgabedaten zweite Eingabedaten zu erzeugen;
wobei entweder die zweite Steuereinheit (110) dazu ausgebildet ist, den ersten generativen vortrainierten Transformer (GPT1) zu betreiben, um abhängig von den zweiten Eingabedaten zweite Ausgabedaten zu erzeugen; und/oder
wobei die Vorrichtung (100) zumindest eine dritte Steuereinheit (112) umfasst, die dazu ausgebildet ist zumindest einen zweiten generativen vortrainierten Transformer (GPT21, GPT22, GPT23) abhängig von den zweiten Eingabedaten zu betreiben, um die zweiten Ausgabedaten zu erzeugen;
wobei entweder die zweite Steuereinheit (110) und/oder die dritte Steuereinheit (112) dazu ausgebildet sind, die Fahrzeugfunktionalität (FKT1, FKT2, FKT3, FKT3) abhängig von den zweiten Ausgabedaten zu betreiben.

11. Computerprogrammprodukt umfassend ein Computerprogramm, wobei das Computerprogramm dazu ausgebildet ist, das Verfahren nach einem der Ansprüche 1 bis 10 auszuführen, wenn das Computerprogramm auf einer oder mehren Steuereinheiten ausgeführt wird.

12. Computerprogrammprodukt gemäß Anspruch 11, wobei das das Computerprogramm einen ersten generativen vortrainierten Transformer und/oder zumindest einen zweiten generativen vortrainierten Transformer umfasst, insbesondere das jeweilige vortrainierte Modell, und/oder Logik und/oder Daten zum Trainieren, insbesondere Nachtrainieren und/oder zum Betreiben des ersten und/oder zweiten generativen vortrainierten Transformers.
